# FASCICULE DE BREVET EUROPEEN

(11) **EP 2 930 104 B1**
(45) Date de publication et mention de la délivrance du brevet: **28.09.2016**
(21) Numéro de dépôt: 15160646.4
(22) Date de dépôt: 24.03.2015
(51) Int. Cl.: B64C 25/26

(54) **PROCÉDÉ DE MANOEUVRE DE TRAPPES DE SOUTES D'AÉRONEF, ET ACTIONNEUR FAISANT APPLICATION**
VERFAHREN ZUR BEDIENUNG DER LADEGUTKLAPPEN EINES LUFTFAHRZEUGS, UND DAZU VERWENDETES STELLGLIED
METHOD FOR MANOEUVRING DOORS OF BAYS OF AIRCRAFT, AND ACTUATOR USED THEREFOR

(30) Priorité: 08.04.2014 FR 1453122
(43) Date de publication de la demande: 14.10.2015
(73) Titulaire: Messier-Bugatti-Dowty, 78140 Vélizy-Villacoublay (FR)
(72) Inventeur: Quenerch'du, Marc, 78140 Vélizy-Villacoublay (FR); Balducci, Gérard, 78140 Vélizy-Villacoublay (FR)
(74) Mandataire: Parzy, Benjamin Alain

(56) Documents cités:
- EP-A1- 2 460 722
- EP-A2- 2 107 273
- WO-A1-2008/102067
- GB-A- 2 428 457

## Description

L'invention est relative à la façon dont des trappes de soute d'aéronef, notamment des trappes fermant les soutes des atterrisseurs, sont manoeuvrées et maintenues fermées, mais également à la façon dont les atterrisseurs sont manoeuvrés et maintenus en position rétractée dans leur soute.

### ARRIERE-PLAN TECHNOLOGIQUE DE L'INVENTION

Sur un aéronef dont les atterrisseurs sont mobiles entre une position déployée et une position rétractée dans laquelle ils sont reçus dans des soutes respectives, on compte deux types de trappes refermant lesdites soutes : les trappes attelées à l'atterrisseur, qui bougent de concert avec ledit atterrisseur et qui se referment lorsque l'atterrisseur arrive en position rétractée, et les trappes indépendantes qui ne sont pas attelées à l'atterrisseur, dont leur mouvement est indépendant de celui de l'atterrisseur.

Les trappes attelées n'ont donc pas besoin d'actionneur, puisqu'elles sont manoeuvrées directement par l'atterrisseur, tandis que les trappes indépendantes nécessitent un actionneur dédié.

En vol, l'atterrisseur est maintenu en position rétractée au moyen d'un crochet de verrouillage adapté à crocheter une olive solidaire de l'atterrisseur. La ou les trappes attelées à cet atterrisseur sont donc également maintenues en position fermée.

Par contre, les trappes indépendantes doivent être maintenues en position fermée par des crochets de verrouillage dédiés adaptés à crocheter des olives solidaires des trappes indépendantes.

Il est souvent difficile d'atteler toutes les trappes à l'atterrisseur. En effet, certaines trappes doivent pouvoir se refermer alors que l'atterrisseur est en position déployée, afin de minimiser les perturbations aérodynamiques dues à l'air s'engouffrant dans la soute.

Dans ce cas, il convient de leur associer un actionneur et un crochet de verrouillage spécifiques, ce qui multiplie les interfaces entre la trappe et la structure de l'aéronef, sans compter la multitude de connexions électriques ou hydrauliques pour commander l'actionneur et le crochet de verrouillage.

Concernant les atterrisseurs, il faut de même assurer leur manoeuvre ainsi que leur maintien en position rétractée, ce qui nécessite également un crochet de verrouillage en position rétractée.

Les documents WO2008/102067 et GB2428457 décrivent d'actionneurs à tiges coulissantes, avec différents dispositifs de verrouillage.

### OBJET DE L'INVENTION

L'invention a pour objet de proposer un procédé de verrouillage de trappe ou d'atterrisseur en position fermée ou rétractée.

### PRESENTATION DE L'INVENTION

En vue de la réalisation de ce but, on propose un procédé de verrouillage, selon la revendication 1 de la présente invention.

Selon un mode particulier de mise en oeuvre de l'invention, le blocage de la tige coulissante est obtenu au moyen d'un organe de blocage interne à l'actionneur adapté à bloquer sélectivement un élément d'une chaîne cinématique entre un organe d'entraînement de la tige coulissante et la tige coulissante.

Il convient de remarquer que les actionneurs électromécaniques habituellement proposés pour la manoeuvre des trappes ou des atterrisseurs comportent en général une commande de secours permettant de libérer axialement la tige coulissante pour permettre le libre coulissement de celle-ci, par exemple en cas de défaillance du moteur de l'actionneur ou grippage de la chaîne cinématique liant le moteur à la tige. En intégrant selon l'invention le verrouillage de l'élément mobile en position fermée directement dans l'actionneur, il est inutile de prévoir une commande de secours spécifique qui pallierait la défaillance du verrouillage interne, puisque la possibilité de libération de la tige déjà existante en tient alors lieu.

Il est donc ainsi possible de proposer un actionneur/verrouilleur de trappe, selon la revendication 2 de la présente invention.

### BREVE DESCRIPTION DES FIGURES

L'invention sera mieux comprise à la lumière de la description qui suit en référence aux figures des dessins annexés, parmi lesquelles :
- la figure 1 est une vue en perspective d'une soute d'atterrisseur d'un aéronef, montrant l'une des trappes de la soute équipées d'un actionneur selon l'invention ;
- la figure 2 est une coupe longitudinale d'un actionneur selon un mode particulier de réalisation de l'invention.

### DESCRIPTION DETAILLEE DES FIGURES

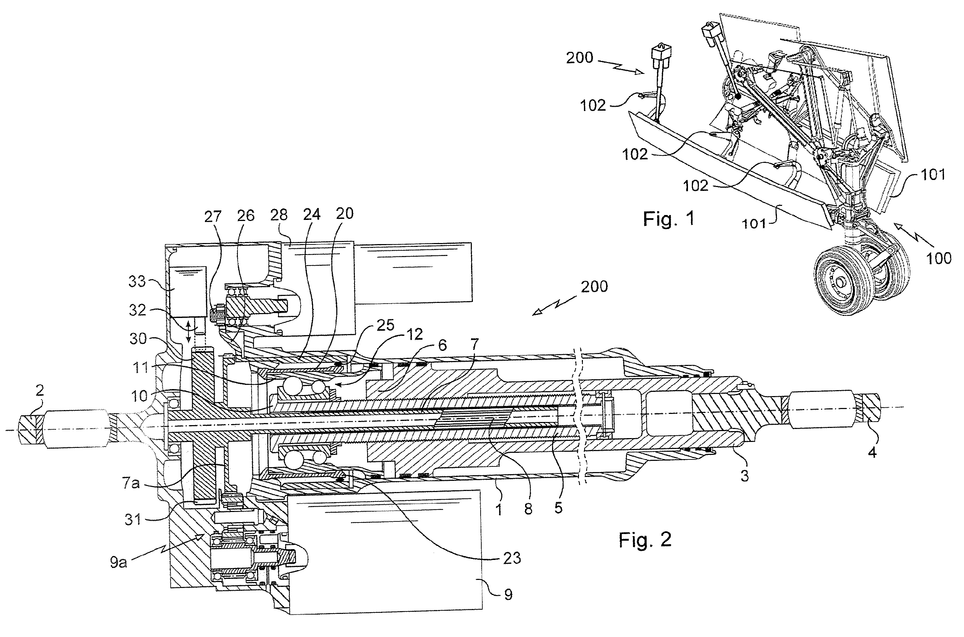

A la figure 1 est illustré un atterrisseur 100 d'aéronef en position déployée. En vol, l'atterrisseur est normalement rétracté dans sa soute fermée par des trappes 101. Les trappes comportent des charnières 102 en col de cygne pour leur articulation sur la structure de l'aéronef. Chacune des trappes 101 est associée à un actionneur 200 qui sera détaillé plus loin et qui permet la manoeuvre de la trappe entre une position ouverte, illustrée ici, et une position fermée. Chaque actionneur est attelé d'une part à la structure de l'aéronef, et d'autre part à la trappe associée. On remarquera que la trappe ne comporte aucune olive d'accrochage, et qu'aucun crochet n'est prévu pour crocheter la trappe lorsqu'elle est ramenée en position fermée par l'actionneur 200, conformément à l'invention.

En référence maintenant à la figure 2, et conformément à un mode particulier de réalisation de l'invention, l'actionneur 200 comporte :
- un corps 1 portant à l'une de ses extrémités une chape 2 munie d'une rotule pour son attelage à un élément externe, par exemple la structure de l'aéronef, l'autre des extrémités du corps étant ouverte ;
- une tige 3 montée à coulissement télescopique dans le corps selon l'axe de coulissement X, et portant à son extrémité une chape 4 portant une rotule pour son attelage à un deuxième élément externe, ici l'une des trappes 101 ;
- une vis mère 5 s'étendant à l'intérieur de la tige 3 et qui coopère avec celle-ci par une liaison hélicoïdale au moyen d'un écrou 6 solidaire de la tige 3 qui forme un palier de la tige et qui et engagé sur un filetage externe de la vis mère 5, de sorte qu'une rotation de la vis mère 5 provoque un coulissement de la tige 3 ;
- un arbre à section non circulaire, par exemple un arbre cannelé 7 qui s'étend à l'intérieur de la vis mère 5 et qui coopère avec celle-ci par une liaison prismatique au moyen de cannelures 8 (montrées ici partiellement, mais s'étendant sur toute la longueur de l'arbre cannelé 7 coopérant avec des cannelures homologues de la vis mère 5 ;
- un moteur 9 adapté à entraîner une roue dentée 7a solidaire de l'arbre cannelé 7 pour entraîner celui-ci en rotation par l'intermédiaire d'un étage de réduction 9a, ladite rotation de l'arbre cannelé 7 provoquant la rotation de la vis mère 5.

La vis mère 5 a une extrémité 10 portant un palier 11 qui forme la cage externe d'un roulement à billes 12 et qui est retenu axialement dans le corps 1 par des moyens de retenue 20, ici du type à griffes. On rappelle pour mémoire que ce type de moyens de retenue comporte une virole dans laquelle sont découpées des griffes ayant des extrémités 23 en crochet et pouvant fléchir radialement pour laisser passer l'objet à retenir, en l'occurrence ici le palier 11 de la vis mère 5.

Dans la situation illustrée, le palier 11 se trouve emprisonné par les griffes 20, celles-ci étant empêchées de fléchir au moyen d'un manchon rotatif 24 qui porte sur sa face interne une succession de billes 25 disposées circonférentiellement en regard des extrémités des griffes et séparées entre elles par des espaces. Lorsque le manchon 24 est placé dans une première position angulaire de blocage (comme illustré ici) dans laquelle les billes 25 sont directement en regard des extrémités 23 des griffes 20, les griffes 20 sont empêchées de fléchir, et le palier 11 est maintenu prisonnier par les griffes 20. Lorsque le manchon 24 est placé dans une seconde position angulaire de libération dans laquelle les espaces entre les billes 25 sont ramenés en regard des extrémités 23 des griffes 20, celles-ci peuvent fléchir radialement, et le palier peut, sous l'effet d'une traction sur la tige 3, s'échapper des griffes 20 pour autoriser ainsi un coulissement de la vis-mère entraîné par la tige 3. Pour faire passer le manchon 24 de la position de blocage à la position de libération, le manchon est ici rendu solidaire d'un levier 26 qui est manoeuvré par un excentrique 27 lui-même actionné par un moteur 28. La rotation du moteur 28 provoque la rotation de l'excentrique 27, et donc le basculement du levier 26 qui entraîne le manchon 24 en rotation.

En cas d'urgence, par exemple en cas de défaillance du moteur 9 ou en cas de grippage de la chaîne cinématique liant le moteur à la tige coulissante, il est alors possible en tournant le manchon 24 de libérer le palier 11 et ainsi d'autoriser la vis mère 5 à se déplacer avec la tige 3 sous une action extérieure (par exemple l'atterrisseur poussant sur la trappe attelée à la tige). Une telle disposition permet de garantir le libre coulissement de la tige 3 même si le moteur 9 est défaillant ou n'est plus alimenté.

Selon l'invention, l'actionneur 200 est équipé de moyens de blocage positif de la tige coulissante. Ici, ces moyens comportent une roue 30 solidaire de l'arbre cannelé 7 comportant des encoches périphériques 31 dans lesquelles un doigt 32 actionné par un électroaimant 33 vient se loger pour bloquer la roue 30 en rotation, ce qui a pour effet de bloquer angulairement l'arbre cannelé, et donc de bloquer axialement la tige coulissante 3.

Avantageusement, lors de la fermeture de la trappe, le moteur 9 est alimenté pour provoquer la rétraction de la tige coulissante 3, et donc la fermeture de la trappe. Lorsque celle-ci arrive en butée, un capteur génère un signal déclenchant l'actionnement du doigt 32. L'ensemble est réglé de sorte qu'aucune encoche 31 ne soit en regard du doigt lorsque la trappe arrive en butée. Le moteur 9 doit alors continuer à tourner pour faire venir l'encoche la plus proche sous le doigt 32, ce qui induit une précontrainte dans la trappe avant que celle-ci ne soit bloquée en position par blocage de la tige coulissante 3 en position rentrée.

Si jamais le doigt 32 ne pouvait être escamoté, suite à une défaillance de l'électroaimant 33, il reste la ressource de commander les moyens de retenue axiale 20 pour libérer le palier 11, ce qui permet le libre coulissement de la tige coulissante 3. La porte 101 peut alors s'ouvrir, par exemple sous la poussée des roues de l'atterrisseur 100 qui se déploie.

L'invention n'est pas limitée à ce qui vient d'être décrit, mais englobe au contraire toute variante entrant dans le cadre défini par les revendications. En particulier, bien qu'ici l'organe de retenue commandable pour libérer sélectivement le palier de la vis mère soit du type à griffes, on pourra utiliser d'autres organes de retenue, comme par exemple un organe de retenue à doigt ou à segment escamotable. De même, bien que l'organe de blocage positif de la tige coulissante en position soit ici du type à doigt entrant dans des encoches d'une roue, on pourra utiliser d'autres types d'organe de blocage positif, comme par exemple un crabot. Enfin, l'actionneur et le procédé de l'invention s'appliquent également à la manoeuvre d'un atterrisseur et son maintien en position rétractée, et plus généralement à tout élément mobile d'un aéronef mobile entre une position déployée et une position rétractée verrouillable.

## Revendications

1. Procédé de verrouillage d'un élément mobile (101) d'aéronef, comme une trappe de soute ou un atterrisseur, l'élément mobile étant déplacé entre une position déployée et une position fermée ou rétractée au moyen d'un actionneur télescopique (200) ayant une tige coulissante (3) attelée à l'élément mobile, la tige étant montée coulissante dans un corps (1) de l'actionneur entre une position sortie correspondant à la position déployée de l'élément mobile et une position rentrée correspondant à la position fermée ou rétractée de l'élément mobile, **caractérisé en ce que** l'actionneur est équipé d'un organe de blocage positif du type à doigt (32) opérable pour entrer dans l'une d'une pluralité d'encoches d'une roue (30) cinématiquement liée à la tige coulissante, le procédé comportant les étapes de :
- faire rentrer la tige jusqu'à ce que l'élément mobile vienne en butée ;
- continuer la rétraction de la tige jusqu'à ce que le doigt (32) vienne en regard d'une encoche ;
- faire rentrer le doigt (32) dans l'encoche en regard, de sorte à bloquer positivement la tige de l'actionneur et induire une précontrainte dans l'élément mobile.

2. Actionneur télescopique spécialement adapté à la mise en oeuvre du procédé selon l'une des revendications précédentes, comportant :
- un corps (1) comportant des moyens de son attelage (2) un premier élément externe ;
- une tige (3) montée à coulissement télescopique dans le corps selon un axe de coulissement (X) et comportant des moyens de son attelage (4) à un deuxième élément externe ;
- une vis mère (5) montée tournante sur le corps autour de l'axe de coulissement et s'étendant à l'intérieur de la tige pour coopérer avec un écrou (6) solidaire de la tige, de sorte qu'une rotation de la vis mère provoque un coulissement de la tige ;
- des moyens d'entraînement en rotation (7, 9) de la vis mère (5) ;
- des moyens de retenue axiale (20) de la vis mère, lesdits moyens de retenue axiale étant commandables pour libérer axialement la vis-mère et ainsi permettre le libre coulissement de la tige coulissante dans le corps ;
- un organe de blocage positif (30 ; 31 ; 32) pour bloquer sélectivement la vis-mère en rotation et ainsi assurer le verrouillage de l'actionneur en position, l'organe de blocage positif comprenant un doigt (32)opérable pour entrer dans l'une d'une pluralité d'encoches d'une roue (30) tournant avec la vis mère.

3. Actionneur télescopique selon la revendication 2, dans lequel les moyens d'entraînement en rotation de la vis mère comportent :
- un arbre de section non circulaire, de préférence un arbre cannelé (7) monté tournant sur le corps autour de l'axe de coulissement et s'étendant à l'intérieur de la vis pour entraîner celle-ci en rotation par une liaison à cannelures;
- un organe moteur (9) d'entraînement en rotation de l'arbre cannelé ;
et dans lequel les moyens de retenue axiale (20) sont commandables pour libérer sélectivement un palier (11) de la vis mère.

4. Actionneur télescopique selon la revendication 3 dans lequel la roue (30) est solidaire de l'arbre cannelé (7).

## Patentansprüche

1. Verfahren zum Verriegeln eines beweglichen Elements (101) eines Luftfahrzeugs, wie eine Laderaumklappe oder ein Fahrwerk, wobei das bewegliche Element mittels eines Teleskopaktors (200), der eine an das bewegliche Element gekoppelte Verschiebestange hat, zwischen einer ausgefahrenen Position und einer geschlossenen oder eingefahrenen Position verschiebbar ist, wobei die Stange in einem Gehäuse (1) des Aktors zwischen einer ausgefahrenen Position, die der ausgefahrenen Position des beweglichen Elements entspricht, und einer eingezogenen Position, die der geschlossenen oder eingefahrenen Position des beweglichen Elements entspricht, verschiebbar gelagert ist, **dadurch gekennzeichnet, dass** der Aktor mit einem Organ zur formschlüssigen Blockierung der Art mit Finger (32) versehen ist, der betätigbar ist, um in eine einer Vielzahl von Kerben eines Rades (30) einzudringen, das kinematisch mit der Verschiebestange verbunden ist, wobei das Verfahren die Schritte umfasst:
- Einziehen der Stange, bis das bewegliche Element zur Anlage kommt;
- Fortsetzen des Einziehens der Stange, bis der Finger (32) einer Kerbe gegenüberliegt;
- Einbringen des Fingers (32) in die gegenüberliegende Kerbe, so dass die Stange des Aktors formschlüssig blockiert und eine Vorspannung in dem beweglichen Element erzeugt wird.

2. Teleskopaktor, der speziell an die Durchführung des Verfahrens nach einem der vorhergehenden Ansprüche angepasst ist, umfassend:
- ein Gehäuse (1), das Mittel für seine Kopplung (2) an ein erstes äußeres Element umfasst;
- eine Stange (3), die in dem Gehäuse gemäß einer Verschiebeachse (X) teleskopisch verschiebbar gelagert ist und Mittel für ihre Kopplung (4) an ein zweites äußeres Element umfasst;
- eine Leitspindel (5), die an dem Gehäuse drehbar um die Verschiebeachse gelagert ist und sich im Inneren der Stange erstreckt, um mit einer fest mit der Stange verbundenen Mutter (6) zusammenzuwirken, so dass eine Drehung der Leitspindel eine Verschiebung der Stange bewirkt;
- Drehantriebsmittel (7, 9) zum Drehantrieb der Leitspindel (5);
- Mittel (20) zum axialen Zurückhalten der Leitspindel, wobei die genannten Mittel zum axialen Zurückhalten steuerbar sind, um die Leitspindel axial freizugeben und so das freie Verschieben der Verschiebestange in dem Gehäuse zu ermöglichen;
- ein Organ zur formschlüssigen Blockierung (30; 31; 32), um die Leitspindel selektiv in Rotation zu sperren und so die Verriegelung des Aktors in seiner Position zu gewährleisten, wobei das Organ zur formschlüssigen Blockierung einen Finger (32) umfasst, der betätigbar ist, um in eine einer Vielzahl von Kerben eines sich mit der Leitspindel drehenden Rades (30) einzudringen.

3. Teleskopaktor nach Anspruch 2, wobei die Drehantriebsmittel der Leitspindel umfassen:
- eine Welle mit nichtkreisförmigem Querschnitt, vorzugsweise eine Keilwelle (7), die an dem Gehäuse drehbar um die Verschiebeachse gelagert ist und sich im Inneren der Spindel erstreckt, um diese über eine Keilverbindung in Rotation anzutreiben;
- ein Motororgan (9) zum Drehantrieb der Keilwelle;
und wobei die Mittel (20) zum axialen Zurückhalten steuerbar sind, um ein Lager (11) der Leitspindel selektiv freizugeben.

4. Teleskopaktor nach Anspruch 3, wobei das Rad (30) fest mit der Keilwelle (7) verbunden ist.

## Claims

1. Method for locking a mobile element (101) of an aircraft, such as a hold door or a landing gear, the mobile element being moved between a deployed position and a closed or retracted position by means of a telescopic actuator (200) having a sliding stem (3) coupled to the mobile element, the stem being mounted so as to be able to slide in a body (1) of the actuator between an extended position corresponding to the deployed position of the mobile element and a withdrawn position corresponding to the closed or retracted position of the mobile element, the actuator being equipped with positive blocking means including a finger (32) operable to enter in one of a plurality of cavities of a wheel (30) that is kinematically linked to the sliding stem, the method comprising the steps of:
- retracting the stem until the mobile element comes in abutment;
- still retracting the stem until the finger (32) is in face of a cavity;
- making the finger enter in the facing cavity so as to positively block the sliding stem of the actuator and to create a prestress in the mobile element.

2. Telescopic actuator specially adapted for implementing the method according the preceding claim, comprising:
- a body (1) comprising means (2) for coupling it to a first external element;
- a stem (3) mounted so as to be able to slide telescopically into the body along a sliding axis (X) and comprising means (4) for coupling it to a second external element;
- a lead screw (5) mounted so as to be able to rotate on the body about the sliding axis and extending within the stem to engage with a nut (6) integral with the stem, such that a rotation of the lead screw causes the stem to slide;
- means (7, 9) for turning the lead screw (5);
- axial retention means (20) for the lead screw, said axial retention means being controllable so as to axially release the lead screw and thus allow the sliding stem to slide freely in the body;
- a positive blocking member (30; 31; 32) for selectively blocking the lead screw in rotation and thus locking the actuator in position, the position blocking member comprising a finger (32) operable to enter one of a plurality of cavities of a wheel (30) turning with the lead screw.

3. Telescopic actuator according to Claim 2, in which the means for turning the lead screw comprise:
- a shaft of non-circular cross section, preferably a splined shaft (7) mounted so as to be able to rotate on the body about the sliding axis and extending within the screw so as to turn the latter by means of a splined connection;
- a motor member (9) for driving the splined shaft in rotation;
and in which the axial retention means (20) can be controlled so as to selectively release a bearing (11) of the lead screw.

4. Telescopic actuator according to Claim 3, in which the positive blocking member comprises a finger (32) which can be operated so as to angularly block a wheel (30) which is integral with the splined shaft (7).
